# EUROPEAN PATENT APPLICATION

(11) **EP 1 688 658 A1**
(43) Date of publication of application: **09.08.2006**
(21) Application number: 06101359.5
(22) Date of filing: 07.02.2006
(51) Int. Cl.: F16L 55/11

(54) **Protective plug particularly for threaded holes, pipe ends, and the like**

(30) Priority: 08.02.2005 IT PD20050027
(71) Applicant: Fastpoint S.r.l., 35020 Saonara PD (IT)
(72) Inventor: Pegoraro, Valerio, 30039 Stra (VE) (IT)
(74) Representative: Modiano, Micaela Nadia

(57) **Abstract**

A protective plug, particularly for threaded holes, pipe ends and the like, constituted by a head (11) from which a body (12) protrudes which is adapted to be forced so as to grip the interior of a hole (13). The body (12) is formed by a central stem (14) from which at least two elastically deformable laminas (15) protrude laterally along at least part of its length and run longitudinally in a substantially axial direction, for friction against the internal surface (16) of the hole (13); each lamina (15) protrudes laterally at least partially in a direction which is not radial with respect to the transverse cross-section of the stem (14); each lamina (15) is adapted, upon contact with the internal surface (16) of the hole (13), to flex elastically toward the inside of the hole (13), applying friction to a region (19) of the internal surface (16) which runs predominantly along the direction of the axis of the hole (13).

## Description

The present invention relates to a protective plug particularly for threaded holes, pipe ends, and the like.

Several types of protective plug, particularly for threaded holes, holes in sheet metal, pipe ends and the like, are currently known and widespread.

These plugs are used extensively, for example, in operations for painting an intermediate component when such component has holes which must not be reached by the color or by other substances by which the intermediate component is affected.

The holes that must not be painted are therefore blocked with temporary protective plugs, which can be inserted easily in the hole and just as easily removed.

Another use of protective plugs is to block temporarily holes in hydraulic components (pipes, valves and the like), which before being installed, or if they are used partially, may have unused holes, which are indeed blocked by means of protective plugs so that dust and dirt in general do not enter them.

In general, these known plugs share a structure which is composed of a head, from which a body protrudes which is adapted to be forced so as to grip the inside of the hole.

In a first type of plug, the body is constituted by at least two tabs, which protrude substantially at right angles to the head, are elastically flexible and are mutually opposite; each tab is provided with a tooth which protrudes outward and is adapted to engage by snap action below the platelike part in which the hole is provided.

Such plugs are suitable to be used only for holes provided in platelike parts of limited thickness (such as metal plate and the like).

In a second type of plug, each one of said tabs has a substantially wedge-shaped end, which forms a protrusion which is adapted to produce friction on a limited circumferential region of the internal surface of the hole, and therefore their grip is generally limited.

A third type of plug is provided with an annular body, which is scarcely adaptable to holes which do not have a diameter which is substantially identical to the diameter of the hole for which they have been designed.

A fourth type of plug is formed by an annular body, from which axially arranged ribs protrude externally.

Such ribs slightly improve the poor adaptability of a plug of the third type described above.

In a fifth type of plug, the body is tubular and is provided with predominantly radially arranged annular laminas.

Such annular laminas are scarcely elastic, and each one generates friction on a limited circumferential region of the internal surface of the hole.

Moreover, a plug with such annular laminas is poorly suitable for holes having a limited thickness, since the laminas protrude radially from the body starting from a certain distance from the head.

The aim of the present invention is to provide a protective plug, particularly for threaded holes, pipe ends and the like, which solves the drawbacks of excessive rigidity and the problems of poor adaptability to holes of various sizes shown by known types of plug.

Within this aim, an object of the present invention is to provide a plug which is well-suited to more diameters than known plugs, at the same time ensuring a grip which is not lower than that of known plugs.

Another object of the present invention is to provide a plug which is capable of ensuring an extraction-preventing grip both in holes of limited thickness, such as the ones provided in sheet metal, and in deep holes.

Another object of the present invention is to provide a plug which can adapt to holes provided with any type of thread.

A further object of the present invention is to provide a plug which can be obtained cheaply by molding plastic material.

A still further object of the present invention is to provide a plug which can be manufactured with known systems and technologies.

This aim and these and other objects, which will become better apparent hereinafter, are achieved by a protective plug, particularly for threaded holes, pipe ends and the like, which is constituted by a head from which a body protrudes which is adapted to be forced so as to grip the interior of a hole, said plug being characterized in that said body is formed by a central stem from which at least two elastically deformable laminas protrude laterally along at least part of its length and run longitudinally in a substantially axial direction for providing friction on the internal surface of said hole, each one of said laminas protruding laterally at least partially in a direction which is not radial with respect to the transverse cross-section of said stem, each lamina being adapted, upon contact with the internal surface of the hole, to flex elastically toward the inside of the hole, producing friction on a region of said internal surface which lies predominantly along the direction of the axis of said hole.

Further characteristics and advantages of the invention will become better apparent from the following detailed description of two preferred but not exclusive embodiments thereof, illustrated by way of non-limiting example in the accompanying drawings, wherein:
Figure 1 is a side view of a plug according to the invention in a first embodiment thereof, inserted by way of example in a threaded hole;
Figure 2 is a bottom view of the plug according to the invention of Figure 1;
Figure 3 is a perspective view of a plug according to the invention, applied to a hole shown in cross-section;
Figure 4 is a bottom perspective view of a plug according to the invention, in a second embodiment;
Figure 5 is a side view of a plug according to the invention in the second embodiment of Figure 4, inserted in a hole provided in a metal sheet.

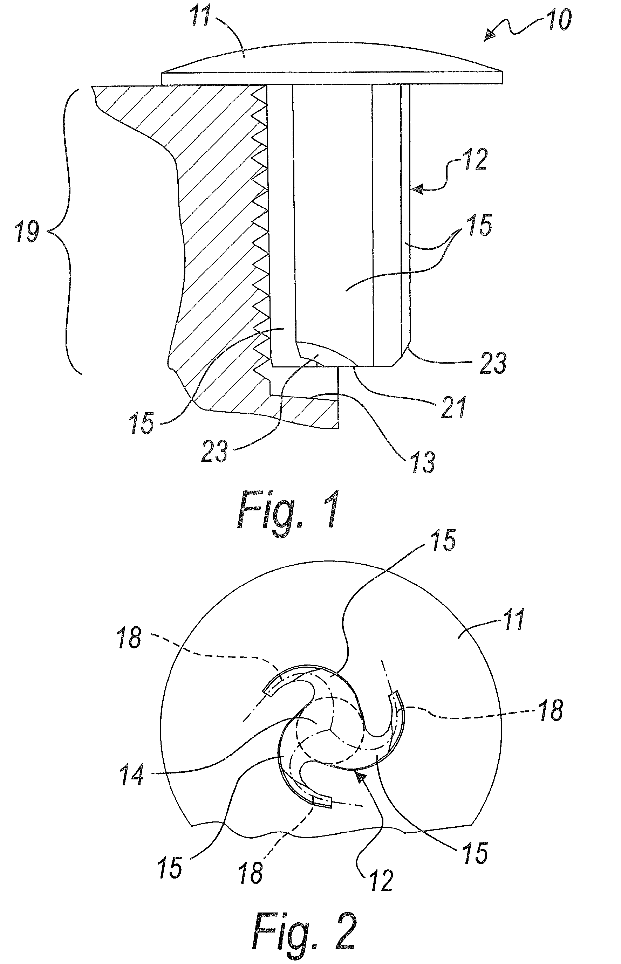

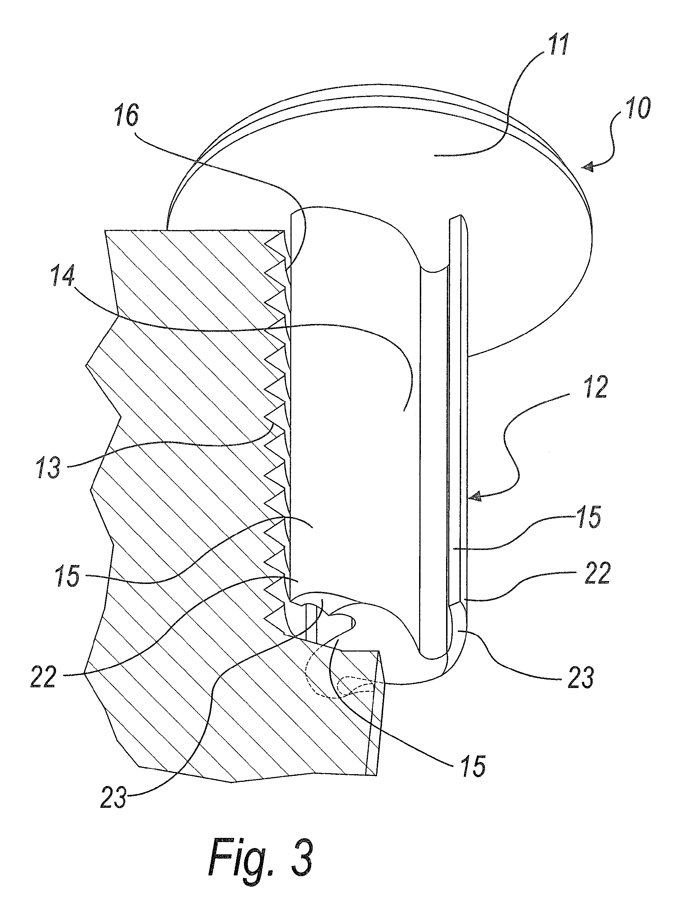

With reference to the figures, a plug according to the invention is designated generally, in the first embodiment shown in Figures 1 to 3, by the reference numeral 10.

The plug 10 is constituted by a head 11, from which a body 12, adapted to be forced so as to grip the interior of a hole 13, protrudes.

The hole 13 can be threaded, as in the example of Figure 1, or not threaded, and can be obtained on a low-thickness part, as in the case of a hole in a sheet of metal, or in a thick part.

The plug 10 is characterized in that the body 12 is formed by a central stem 14, from which three elastically deformable laminas 15 protrude laterally along its entire length.

The laminas 15 run longitudinally in a substantially axial direction.

The laminas 15 are adapted to press against the internal surface 16 of the hole 13, producing friction thereon, so as to ensure the grip of the plug 10.

Each lamina 15 runs laterally along a central line 18 which is at least partially different from the radial direction with respect to the transverse cross-section of the stem 14.

In the exemplary embodiment described here, each lamina 15 in fact has a central line 18 of its transverse cross-section which is substantially shaped like a circular arc.

The curvature of the central line 18 in the shape of a circular arc described here is merely a non-limiting example of the geometries that the laminas 15 can assume in other equivalent embodiments of the invention, which are not described here for the sake of brevity.

The laminas 15, upon contact with the internal surface 16 of the hole 13, are adapted to flex elastically toward the inside of the hole 13, producing friction on a region 19 which runs predominantly in an axial direction, i.e., in the direction of the depth of the hole 13.

In the embodiment of the invention described here, the transverse cross-section of the stem 14 and of the laminas 15 which extend from it is substantially helical, as shown in Figure 2.

The plug 10, as mentioned, is provided with three laminas 15 which are mutually equidistant at 120°.

The laminas 15 have a transverse cross-section in which the central line 18 is shaped substantially like a circular arc and extend in an axial direction from the head 11 to an axial end 21 of the stem 14.

Each one of the laminas 15 has, at its end 22 in the axial direction of insertion in the hole 13, a bevel 23 for guiding insertion.

The plug 10 according to the invention can be manufactured cheaply by using plastic material.

In particular, the plug 10 can be obtained by molding polyamide, acetal resin, polyethylene, polypropylene, polycarbonate, rubber and other similar materials.

Depending on the material used, the resiliency of the laminas 15 changes and therefore so does the extraction resistance of the plug 10, which therefore can be manufactured specifically by using a selected plastic material depending on the type of hole for which it is intended and on the material in which said hole is provided.

Thanks to the elastically deformable lateral laminas 15, the plug 10 is capable of applying pressure to longitudinal and substantially continuous contact regions 19 of the internal surface 16 of the hole 13.

Known plugs, whose grip is produced by the friction of the body of the plug against the internal surface of the hole (such as for example plugs with annular laminas) instead apply pressure on annular regions of the internal surface of the hole, which have a very limited axial extension.

The plug 10 is well-suited for blocking threaded holes, indeed thanks to the length of the laminas, which apply their pressure to the crests of the thread.

The elastically flexible laminas 15 allow the plug 10 according to the invention to adapt to a much broader range of hole diameters than known plugs.

The laminas 15 allow the plug 10 to adapt and grip, when needed, even holes which do not have a circular cross-section, such as for example oval holes, quadrangular holes, and the like.

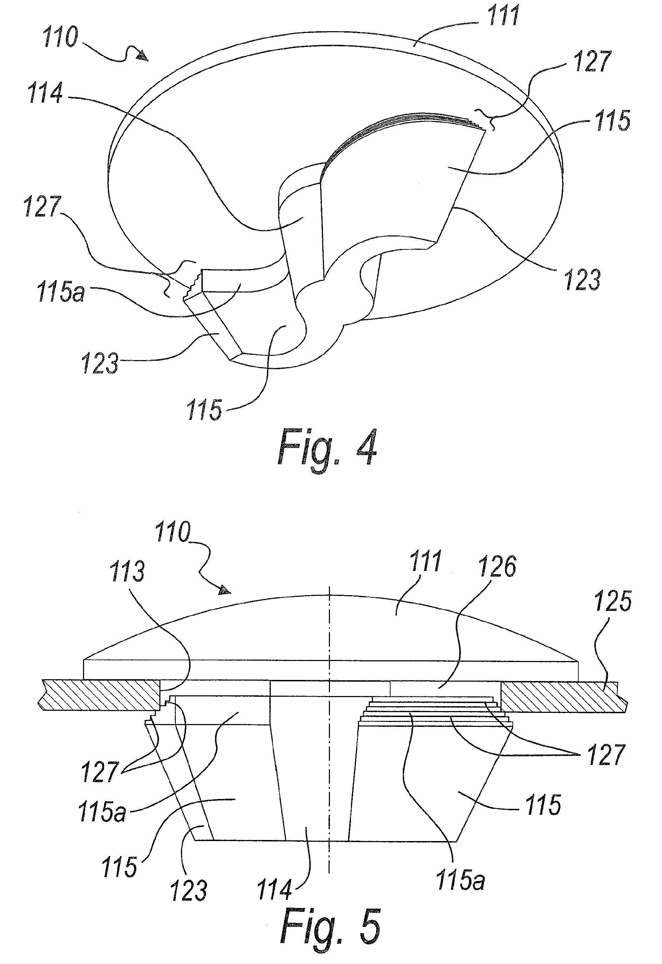

A second embodiment of a plug according to the invention is shown in Figures 4 and 5, and is designated by the reference numeral 110.

In this second embodiment two laminas 115 are provided, the transverse cross-section of which likewise has, as in the first embodiment, a central line which is substantially shaped like a circular arc.

The transverse cross-section of the laminas 115 and of the stem 114 from which they protrude therefore forms a helical contour.

An undercut space 126 is provided between the two laminas 115 and the head 111 of the plug 110.

The portion 115a of the laminas 115 which lies closest to the head 111 has a plurality of circumferential steps 127, the radius of which gradually increases as the distance from the head 111 increases.

The fact that each lamina 115 is independent of the head 111 and that the circumferential steps 127 are present, allows the plug 110 to adapt so as to close holes provided in metal plate, such as the hole 113 provided by way of example, which not only have a different diameter but also have a different thickness.

The independence of the lamina 115 from the head 111 in fact allows the lamina 115 to flex radially inward along its entire axial length and to grip with its portion 115a below the rim of the metal plate 125 that surrounds the hole 113.

The portion 115a, with its plurality of steps 127, is capable of adapting to holes 113 provided in metal plates 115 of a different thickness, since each step 127 corresponds to at least one thickness.

The laminas 115, below the portion 115a, have a substantially frustum-shaped profile, which together with the bevels 123, which are larger than in the first embodiment, facilitates the insertion of the plug 110 even in holes 113 which have a very small diameter with respect to the diameter in which the free laminas 115, i.e., the laminas in their original configuration, can be inscribed.

In practice it has been found that the plug according to the invention thus described achieves the intended aim and objects and further solves the drawbacks noted in known types of plug.

In particular, the present invention provides a plug which solves the drawbacks of excessive rigidity and the problems of limited adaptability to holes of different sizes shown by known types of plug.

Moreover, the present invention provides a plug which is well-suited to more diameters than known types, ensuring at the same time a grip which is not lower than that of said known plugs.

Further, the present invention provides a plug which is capable of ensuring grip both on low-thickness holes, such as those obtained in metal sheets of various thicknesses, and on deep holes.

Moreover, the present invention provides a plug which is capable of adapting to holes which have any type of thread.

Further, the present invention provides a plug which can be obtained cheaply by molding plastic material.

Moreover, the present invention provides a plug which can be manufactured with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000027 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A protective plug, particularly for threaded holes, pipe ends and the like, constituted by a head (11, 111) from which a body (12) protrudes which is adapted to be forced so as to grip the interior of a hole (13, 113), said plug (10, 110) being **characterized in that** said body (12) is formed by a central stem (14, 114) from which at least two elastically deformable laminas (15, 115) protrude laterally along at least part of its length and run longitudinally in a substantially axial direction and are adapted to press against the internal surface (16) of said hole (13, 113), each one of said laminas (15, 115) protruding laterally at least partially in a direction which is not radial with respect to the transverse cross-section of said stem (14, 114), each lamina (15, 115) being adapted, upon contact with the internal surface (16) of the hole (13, 113), to flex elastically toward the inside of the hole (13, 113).

2. The plug according to claim 1, **characterized in that** each lamina (15) applies friction to a region (19) of said internal surface (16) which lies predominantly in the direction of the axis of said hole (13).

3. The plug according to claim 1, **characterized in that** the transverse cross-section of said stem (14, 114) and of said at least two laminas (15, 115) which protrude from it is substantially helical.

4. The plug according to one or more of the preceding claims, **characterized in that** each one of said at least two laminas (15, 115) has a central line (18) of its transverse cross-section which is substantially shaped like a circular arc.

5. The plug according to one or more of the preceding claims, **characterized in that** it has three equidistant laminas (15), whose transverse cross-section has a central line (18) which is substantially shaped like a circular arc, said laminas extending in an axial direction from said head (11) to the axial end (21) of said stem (14).

6. The plug according to one or more of the preceding claims, **characterized in that** each lamina (15, 115) has, at its end (22) in the direction for insertion in the hole (13, 113), a bevel (23, 123) for guiding insertion.

7. The plug according to one or more of the preceding claims, **characterized in that** an undercut space (126) is provided between the laminas (115) and the head (111) of the plug (110), the portion (115a) of the laminas (115) which lies closest to the head (111) being provided with a plurality of circumferential steps (127) whose radius increases as the distance from the head (111) increases.

8. The plug according to claim 6, **characterized in that** it has two laminas (115), which below the portion (115a) have a substantially frustum-shaped profile which, together with the bevels (123), is adapted to facilitate the insertion of the plug (110) in holes (113) which have a small diameter with respect to the diameter in which the free laminas (115) can be inscribed.

9. The plug according to one or more of the preceding claims, **characterized in that** it is made of plastic material.
